# FASCICULE DE BREVET EUROPEEN

(11) **EP 1 626 900 B1**
(45) Date de publication et mention de la délivrance du brevet: **05.03.2008**
(21) Numéro de dépôt: 03740678.2
(22) Date de dépôt: 28.04.2003
(51) Int. Cl.: B64D 29/00

(54) **AGENCEMENT D'ENTREE D'AIR D'UN TURBOPROPULSEUR.**
LUFTEINLASSEINRICHTUNG FÜR TURBOPROPTRIEBWERKE
AIR INPUT DEVICE FOR A TURBOPROP ENGINE

(43) Date de publication de la demande: 22.02.2006
(73) Titulaire: SNECMA, 75015 Paris (FR)
(72) Inventeur: CHAUMERET, Michel, 41100 Vendome (FR); MAZEAUD, Georges, F-91330 YERRES (FR)
(74) Mandataire: Poulin, Gérard
(86) Numéro de dépôt international: PCT/FR2003/001327
(87) Numéro de publication internationale: WO 2004/096641

(56) Documents cités:
- EP-A- 0 971 111
- US-A- 5 941 061

## Description

L'invention ressortit à un agencement d'entrée d'air d'un turbopropulseur.

Un tel agencement, comme par example décrit dans EP-0 971 111 et qui montre toutes les caractéristiques du préambule de la revendication indépendante, comprend une hélice de soufflante s'étendant devant un bec d'entrée d'air qui entoure une section d'entrée de l'air dans le turbopropulseur. De plus, derrière l'hélice s'étend une enveloppe délimitant aussi la section d'entrée d'air et englobant un compartiment situé autour de l'axe de l'hélice et qui est occupée par certains équipements du turbopropulseur qui sont sujets à des entretiens. L'accès à ces équipements est assuré en ouvrant un panneau de l'enveloppe. Cependant, le bec d'entrée d'air s'étend à peu de distance derrière l'hélice afin de limiter la longueur du turbopropulseur, son poids et de maintenir des performances aérodynamiques satisfaisantes. Il résulte de cela que le bec d'entrée d'air couvre en grande partie le panneau de l'enveloppe et contrarie son ouverture.

Le sujet de l'invention est donc de supprimer ce problème. On y parvient au moyen d'un agencement d'entrée d'air du genre mentionné jusqu'ici et caractérisé en ce que le bec est divisé en deux parties séparables s'étendant sur des secteurs complémentaires de tour, et en ce que les parties du bec sont assemblées de manière séparable à une partie principale de la nacelle de turbopropulseur dont ils constituent la partie antérieure.

De plus, la partie principale de la nacelle comprend un mur d'étanchéité sur lequel le bec est posé et assemblé.

En séparant les parties du bec, il est possible de les extraire du turbopropulseur et d'accéder complètement au panneau d'ouverture de l'enveloppe et aux équipements intérieurs.

Dans un aménagement particulier, les parties du bec sont assemblées de manière séparable à la partie principale de la nacelle par des vis traversant le mur d'étanchéité, engagées dans des taraudages des parties du bec et ayant, des têtes accessibles au moyen d'un capot s'ouvrant sur la partie principale de la nacelle. Le système d'assemblage est simple et commode.

Enfin, il est possible que les parties séparables du bec soient assemblées entre elles quand le bec est assemblé à la partie principale de la nacelle. Il est alors avantageux que les parties du bec soient assemblées entre elles par des brides respectives munies de boulons, les brides d'une des parties étant rentrantes dans une enveloppe de ladite partie et les brides de l'autre des parties étant saillantes d'une enveloppe de ladite autre des parties. Ici encore, on utilise un système simple d'assemblage, et surtout le décalage entre les joints des enveloppes des parties de bec et les brides d'assemblages permet d'obtenir une étanchéité améliorée.

L'invention sera maintenant décrite en détail en liaison aux figures dont :

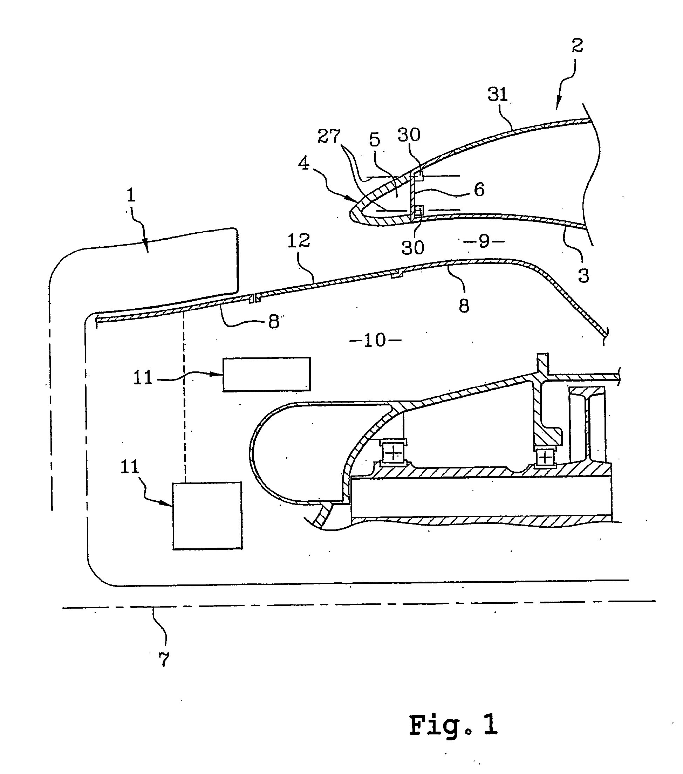

- la figure 1 est une vue d'ensemble de l'entrée d'air à l'état monté,
- la figure 2 est une vue générale du bec d'entrée d'air,
- la figure 3 est une vue partielle du bec en direction axiale,
- et les figures 4 et 5 illustrent les deux étapes essentielles de démontage de l'entrée d'air.

Une hélice 1 de soufflante à l'entrée d'un turbopropulseur s'étend devant une nacelle 2 dont une partie principale 3 est prolongée par un bec d'entrée d'air 4 circulaire et dont la forme générale de section est un triangle curviligne ayant un sommet dirigé vers l'avant et l'hélice 1. L'intérieur du bec d'entrée d'air 4 constitue une enceinte de dégivrage 5 qu'un mur d'étanchéité 6 coupant la nacelle 2 sépare de la partie principale 3. L'hélice 1 est soutenue par un axe 7 autour duquel est située une enveloppe 8 qui délimite une section d'entrée d'air 9 avec la nacelle 2 située autour d'elle. L'enveloppe 8 de révolution englobe un compartiment 10 annulaire porteur de divers équipements 11 du turbopropulseur, que portent des moyens de support non représentés. Un panneau 12 amovible de l'enveloppe 8 permet d'accéder aux équipements 11 de l'extérieur. Il est assemblé au reste de l'enveloppe 8 par des moyens ordinaires comme des vis de fixation, des charnières, etc. Sa superficie est telle qu'il s'étend forcément en partie sous le bec d'entrée 4.

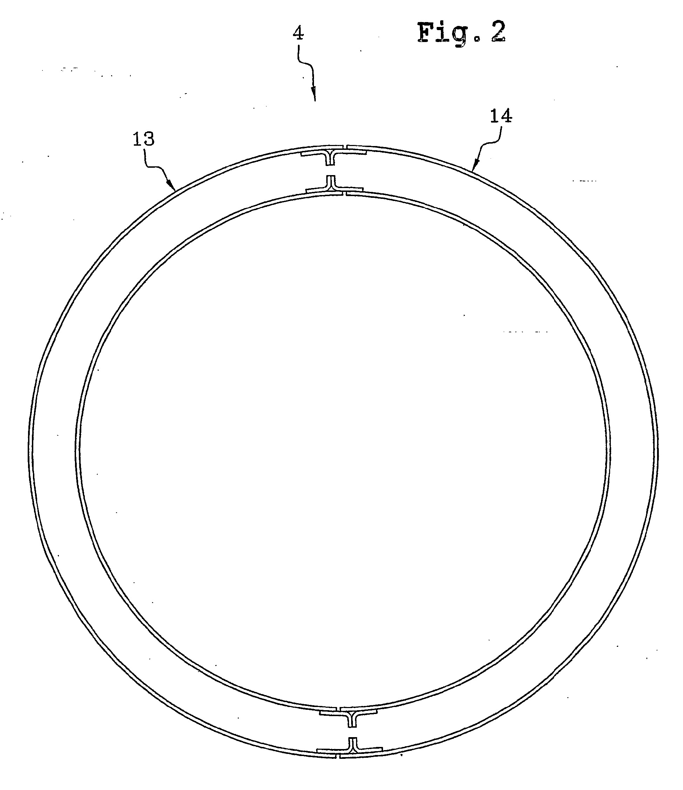

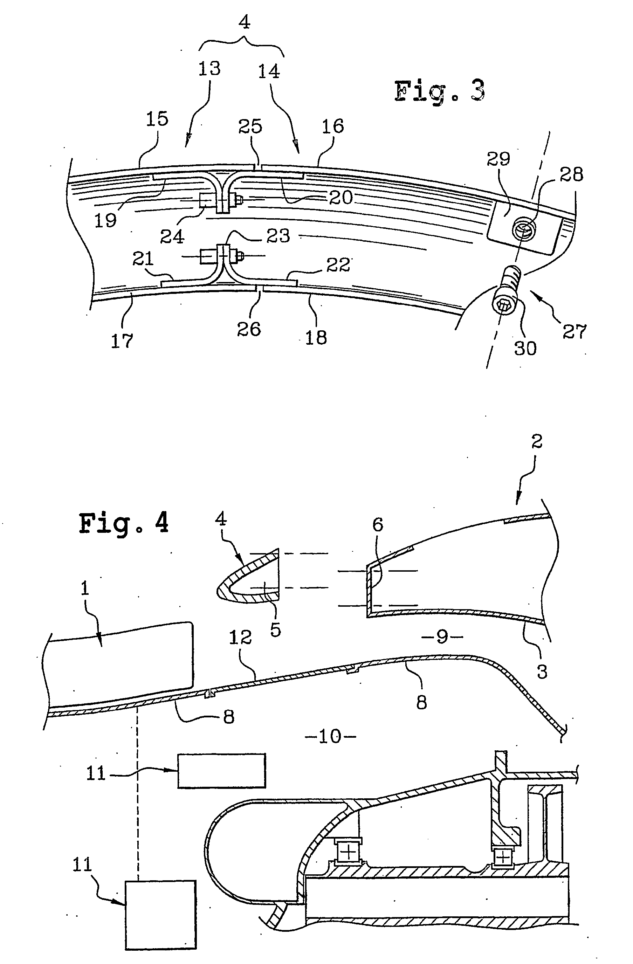

Le bec d'entrée d'air 4 est ici composé, comme on le voit à la figure 2, de deux parties 13 et 14 sensiblement semi-circulaires et s'étendant sur des portions complémentaires d'un tour, dont la figure 3 illustre la jonction. Elles comprennent chacune des enveloppes extérieures 15, 16 et intérieures 17, 18 et des brides extérieures 19, 20 et intérieures 21, 22 toutes de forme coudée et comprenant une portion fixée à l'enveloppe associée et une portion d'orientation radiale 23, voisine du bord de l'enveloppe. Les portions radiales des brides 19 à 22 sont affectées à l'assemblage des brides externes 15 et 16 entre elles et des brides internes 17 à 18 entre elles, en insérant des boulons 24 à travers elles. On notera que les brides 19 et 21 de la partie 13 sont quelque peu rentrantes dans les enveloppes 15 et 17, alors que les brides 20 et 22 de l'autre des parties 14 sont quelque peu saillantes des enveloppes 16 et 18. On évite ainsi d'exposer les assemblages boulonnés sous les lignes de joint 25 et 26 des enveloppes des parties 13 et 14 du bec d'entrée d'air 4, pour améliorer l'aspect, l'étanchéité et mieux protéger les brides. L'autre jonction des parties 13 et 14 est symétrique.

Le mur d'étanchéité 6 comprend des perçages par lesquels pénètrent des vis 27 dont les tiges s'engagent dans des taraudages 28 disposés sur des pattes 29 des parties 13 et 14 du bec d'entrée d'air 4, qui est donc vissé au mur d'étanchéité 6 et à la partie principale de la nacelle 3. Les têtes 30 des vis 27 s'appuient sur le mur d'étanchéité 6 derrière le bec d'entrée d'air. On peut y accéder en pourvoyant la nacelle 2 d'un capot amovible 31 situé derrière le mur d'étanchéité 6 et assemblé à la nacelle de la même façon que le panneau 12 lié à l'enveloppe 8.

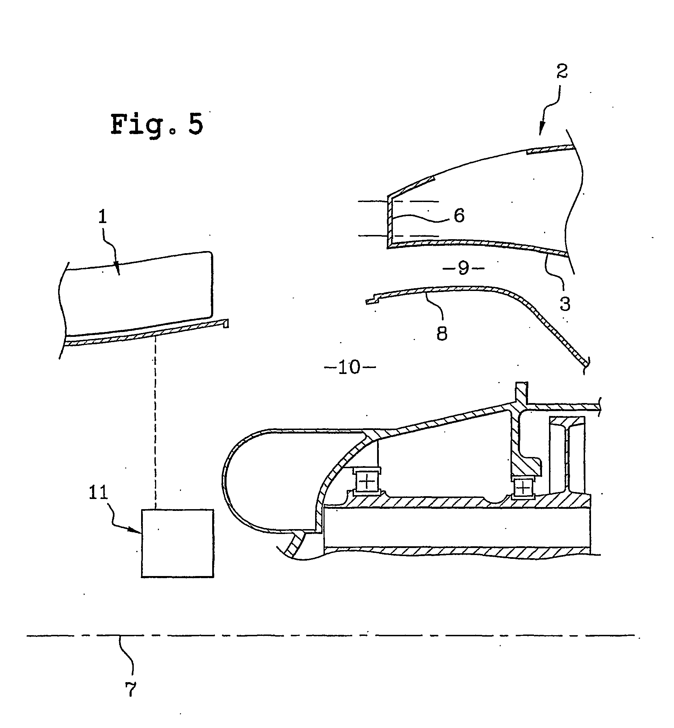

Le procédé pour ouvrir le panneau 12 est donc le suivant: on ouvre le capot 31, enlève les vis 27, avance le bec d'entrée d'air vers l'hélice 1 (figure 4), enlève les boulons 24 pour séparer les parties 13 et 14, avant d'extraire ces dernières. Un plein accès au panneau 12 est alors réalisé, ce qui rend possible de l'ouvrir sans aucune difficulté (figure 5). Des étapes inverses permettent de remonter le bec d'entrée d'air 4.

L'invention resterait praticable en adoptant certaines modifications à la réalisation décrite. Les parties comprenant le bec d'entrée d'air 4 pourraient ainsi être plus de deux.

## Revendications

1. Agencement d'entrée d'air d'un turbopropulseur comprenant une hélice (1), un bec d'entrée d'air (4) entourant une section d'entrée d'air (9) et constituant une extrémité antérieure d'une nacelle (2) enveloppant le turbopropulseur, la section d'entrée d'air (9) entourant une enveloppe (8) qui s'étend derrière l'hélice (1), englobe un compartiment (10) et est munie d'un panneau (12) d'ouverture situé au moins partiellement sous le bec (14), **caractérisé en ce que** le bec (4) est divisé en deux parties (13, 14) séparables s'étendant sur des secteurs, complémentaires de tour, et **en ce que** les parties (13, 14) du bec (4) sont assemblées de manière séparable à un mur d'étanchéité (6) compris dans une partie principale (3) de la nacelle (2), et **en ce que** le bec (4) est posé sur le mur d'étanchéité (6).

2. Agencement d'entrée d'air selon la revendication 1, **caractérisé en ce que** les parties (13, 14) du bec (4) sont assemblées de manière séparable à la partie principale de la nacelle par des vis (27) traversant le mur d'étanchéité (6), engagées dans des taraudages des parties (13, 14) du bec (4) et ayant des têtes accessibles au moyen d'un capot s'ouvrant sur la partie principale de la nacelle.

3. Agencement d'entrée d'air selon l'une quelconque des revendications 1 ou 2, **caractérisé en ce que** les parties (13, 14) du bec (4) sont assemblées entre elles par des brides respectives unies par des boulons (24), les brides (19, 21) d'une des parties étant rentrantes dans une enveloppe (15, 17) de ladite partie et les brides (20, 22) de l'autre des parties étant saillantes d'une enveloppe (16, 18) de ladite autre des parties.

## Claims

1. Air intake layout for a turboprop engine comprising a propeller (1), an air intake leading edge (4) surrounding an air intake section (9) and forming a rear end of a nacelle (2) surrounding the turboprop, the air intake section (9) surrounding a shroud (8) that extends behind the propeller (1), encloses a compartment (10) and is fitted with an opening panel (12) located at least partially under the leading edge (14), **characterized in that** the leading edge (4) is divided into two separable parts (13, 14) extending over complementary parts of a circumference, and **in that** parts (13, 14) of leading edge (4) are assembled separably to a leaktight wall (6) included in a main part (3) of the nacelle (2) and **in that** the leading edge (4) is placed on the leaktight wall (6).

2. Air intake layout according to claim 1, **characterized in that** the parts (13, 14) of leading edge (4) are assembled separably to the main part of the nacelle through screws (27) passing through the leaktight wall (6), engaged in tapped threads of parts (13, 14) of leading edge (4) and with heads that can be accessed through a cover that opens onto the main part of the nacelle.

3. Air intake layout according to any one of claims 1 or 2, **characterized in that** parts (13, 14) of leading edge (4) are assembled together by flanges fitted with bolts (24), the flanges (19, 21) of one of the parts reentering into a shroud (15, 17) of the said part and the flanges (20, 22) of the other part projecting from the shroud (16, 18) of the said other part.

## Patentansprüche

1. Lutteinlassvorrichtung für Turboprop-Triebwerke mit einem Propeller (1), einem Lufteinlass-Schnabel (4), der einen Lufteinlass-Abschnitt (9) umgibt und ein hinteres Ende einer das Turboprop-Triebwerk umhüllenden Triebwerksgondel (2) bildet, wobei der Lufteinlass-Abschnitt (9) einen Mantel (8) umgibt, der sich hinter dem Propeller (1) erstreckt, einen Raum (10) umschließt und mit einer Öffnungsplatte (12) versehen ist, die sich zumindest teilweise unter dem Schnabel (14) befindet,
**dadurch gekennzeichnet,**
**dass** der Schnabel (4) in zwei voneinander trennbare Teile (13, 14) unterteilt ist, die sich über komplementäre umlaufende Kreissegmente erstrecken, und dass die Teile (13. 14) des Schnabels (4) trennbar an einer Dichtungswand (6) angebaut sind, welche sich in einem Hauptteil (3) der Triebwerksgondel (2) befindet, und dass der Schnabel (4) auf die Dichtungswand (6) aufgesetzt ist.

2. Lulteinlassvorrichtung nach Anspruch 1,
**dadurch gekennzeichnet,**
**dass** die Teile (13, 14) des Schnabels (4) trennbar an dem Hauptteil der Triebwerksgondel angebaut sind, und zwar durch Schrauben (27), die durch die Dichtungswand (6) hindurch verlaufen, sich in Innengewinden der Teile (13, 14) des Schnabels (4) in Eingriff befinden, und deren Köpfe mittels eines Deckels zugänglich sind, der sich an dem Hauptteil der Triebwerksgondel öffnet.

3. Lulteinlassvorrichtung nach einem der Ansprüche 1 oder 2,
**dadurch gekennzeichnet,**
**dass** die Teile (13, 14) des Schnabels (4) aneinander durch jeweilige Flansche zusammengebaut sind, die durch Schraubbolzen (24) miteinander verbunden sind, wobei die Flansche (19, 21) des einen Teils in einem Mantel (15, 17) dieses Teils sitzen und die Flansche (20, 22) des anderen Teils aus einem Mantel (16, 18) dieses anderen Teils herausragen.
